# FASCICULE DE BREVET EUROPEEN

(11) **EP 2 624 996 B1**
(45) Date de publication et mention de la délivrance du brevet: **19.04.2017**
(21) Numéro de dépôt: 11779800.9
(22) Date de dépôt: 05.10.2011
(51) Int. Cl.: B23P 15/04, B21D 53/78, B21D 39/03, B23K 20/02, F01D 5/14, F04D 29/32, B29C 65/48, B29C 65/00, C22F 1/18, C21D 9/00

(54) **PROCÉDÉ DE RÉALISATION D'UNE PIÈCE MÉTALLIQUE.**
VERFAHREN ZUR HERSTELLUNG EINES METALLTEILS
METHOD FOR MANUFACTURING A METAL PART

(30) Priorité: 05.10.2010 FR 1058077
(43) Date de publication de la demande: 14.08.2013
(73) Titulaire: Snecma, 75015 Paris (FR)
(72) Inventeur: DAMBRINE, Bruno, Jacques, Gérard, F-77550 Moissy-Cramayel Cedex (FR); GODON, Thierry, F-77550 Moissy-Cramayel Cedex (FR); PERROUX, Alain, Robert, Yves, F-77550 Moissy-Cramayel Cedex (FR)
(74) Mandataire: Camus, Olivier Jean-Claude
(86) Numéro de dépôt international: PCT/FR2011/052323
(87) Numéro de publication internationale: WO 2012/049401

(56) Documents cités:
- EP-A1- 1 574 270
- EP-A1- 1 908 919
- EP-A2- 0 815 995
- WO-A1-2009/039282
- FR-A1- 2 684 578
- US-A1- 2004 096 350

## Description

La présente invention concerne un procédé de réalisation d'une pièce métallique telle que par exemple un renfort métallique d'aube composite ou métallique de turbomachine.

Plus particulièrement l'invention concerne un procédé de réalisation d'un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable à la réalisation d'un renfort métallique destiné à renforcer un bord d'attaque ou de bord de fuite d'aube de tout type de turbomachine, terrestre ou aéronautique, et notamment un turbomoteur d'hélicoptère ou un turboréacteur d'avion mais également d'hélices telles que des hélices de double soufflantes contrarotatives non carénées (« open rotor » en langue anglaise).

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Les aubes de turbomachine, et notamment les aubes de soufflante, subissent d'importantes contraintes mécaniques, liées notamment à la vitesse de rotation, et doivent satisfaire à des conditions strictes de poids et d'encombrement. Par conséquent, on utilise des aubes en matériaux composites qui sont plus légères.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délaminage, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique réalisée entièrement par fraisage à partir d'un bloc de matière.

Cependant, le renfort métallique d'un bord d'attaque d'aube est une pièce complexe à réaliser, nécessitant de nombreuses opérations de reprises et des outillages complexes impliquant des coûts de réalisation importants.

Des procédés alternatifs sont connus, notamment dans le document WO 2009/039282, utilisant le principe de soudage diffusion pour réaliser un renfort métallique de bord d'attaque de turbomachine. Toutefois, ces procédés ne donnent pas entière satisfaction. Ce document représente l'état de la technique le plus proche et décrit notamment un procédé de réalisation d'une pièce métallique comportant successivement :
- une étape de découpe d'une pluralité d'encoches dans au moins un clinquant métallique souple;
- une étape de positionnement d'au moins un clinquant métallique sur un outillage de forme, ledit au moins un clinquant étant apte à se déformer manuellement à froid selon les trois directions de l'espace (X, Y, Z) ; et
- une étape de pressage isostatique à chaud dudit au moins un clinquant dans un outillage provoquant l'agglomération dudit clinquant de manière à obtenir ladite pièce métallique.

Dans ce contexte, l'invention vise à résoudre les problèmes mentionnés ci-dessus en proposant un procédé de réalisation d'un renfort métallique de bord d'attaque ou de bord de fuite d'aube de turbomachine permettant de simplifier la gamme de fabrication d'une telle pièce tout en réduisant les coûts de réalisation.

A cette fin, l'invention propose un procédé de réalisation d'une pièce métallique la selon la revendication 1.

Grâce à l'invention, la pièce métallique de forme complexe, telle que par exemple un renfort structurel métallique comportant deux courbures selon deux plans distincts (ou un vrillage selon un axe), est réalisée de façon simple et rapide à partir d'au moins un serpentin métallique souple et déformable selon trois dimensions, obtenu par des opérations simples de découpage de feuilles ou de feuillards métalliques, et d'un procédé de pressage ou de compactage isostatique à chaud (HIP pour Hot Isostatic Pressing en langue anglaise) permettant d'obtenir une pièce compacte et sans porosité par la combinaison de déformation plastique, de fluage et de soudage diffusion.

Les serpentins métalliques sont formés en réalisant des découpes sur des clinquants métalliques de faible épaisseur dont la géométrie correspond sensiblement au développé de la pièce métallique à réaliser. Les serpentins métalliques ainsi confectionnés sont facilement déformables et facilement positionnables sur un gabarit de forme, tel qu'un mannequin, ou directement sur la contre-empreinte d'un outillage de forme.

Ce procédé de réalisation permet ainsi de s'affranchir de la réalisation complexe du renfort d'aube par usinage dans la masse, de type fraisage, brochage, à partir de méplats nécessitant de grand volume de matière de mise en oeuvre et par conséquent des coûts importants en approvisionnement de matière première. Le procédé permet également de réaliser facilement des renforts métalliques qui respectent des exigences strictes de masse et/ou géométriques.

Le procédé de réalisation selon l'invention peut également présenter une ou plusieurs des caractéristiques ci-dessous, considérées individuellement ou selon toutes les combinaisons techniquement possibles :
- ledit au moins un serpentin métallique est formé par l'assemblage de deux clinquants métalliques découpés lors de ladite étape de découpe d'une pluralité d'encoches ;
- préalablement à ladite étape de positionnement, ledit procédé comporte une étape de confection d'au moins une poche métallique à partir d'au moins un clinquant métallique souple, ledit au moins un serpentin métallique étant formé par une étape de découpe d'une pluralité d'encoches dans ladite au moins une poche métallique souple ;
- ladite étape de découpe d'encoches est réalisée par découpe d'une pluralité d'encoches réparties sur la longueur dudit clinquant métallique selon un pas de découpe donné ;
- préalablement à ladite étape de découpe d'une pluralité d'encoches, ledit procédé comporte une étape de découpe d'au moins un clinquant métallique souple dans au moins une feuille métallique d'une épaisseur inférieure à 0,3 mm ;
- préalablement à ladite étape de pressage isostatique, ledit procédé comporte une étape d'empilement d'au moins un deuxième serpentin métallique sur ledit premier serpentin métallique positionné sur ledit outillage de forme ;
- deux serpentins métalliques empilés successivement lors de ladite étape d'empilement ont des pas de découpe décalés l'un par rapport à l'autre ;
- ladite pièce métallique est un renfort métallique de bord d'attaque ou de bord de fuite d'aube de turbomachine ou un renfort métallique d'hélice ;
- ledit outillage de forme est un gabarit de forme ou la contre-empreinte d'un outillage de pressage isostatique ou l'empreinte dudit outillage de pressage isostatique.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort structurel métallique creux de bord d'attaque obtenu au moyen du procédé de réalisation selon l'invention ;
- la figure 2 est une vue partielle en coupe de la figure 1 selon un plan de coupe AA ;
- la figure 3 est un schéma synoptique présentant les principales étapes de réalisation d'un renfort structurel métallique de bord d'attaque d'aube de turbomachine du procédé de réalisation selon l'invention ;
- la figure 4 illustre une vue de côté du renfort métallique de bord d'attaque d'aube de turbomachine lors de la première étape du procédé illustré à la figure 3 ;
- la figure 5 illustre une vue de côté du renfort métallique de bord d'attaque d'aube de turbomachine lors de la deuxième étape du procédé illustré à la figure 3 ;
- la figure 6 illustre une vue en coupe du renfort métallique de bord d'attaque d'aube de turbomachine lors de la troisième étape du procédé illustré en figure 3 ;
- la figure 7 illustre une vue en coupe du renfort métallique de bord d'attaque d'aube de turbomachine lors de la quatrième étape du procédé illustré en figure 3.

Dans toutes les figures, les éléments communs portent les mêmes numéros de référence sauf précision contraire.

Dans la suite de la description, le renfort métallique de bord d'attaque ou de bord de fuite sera indifféremment nommé renfort métallique ou encore renfort.

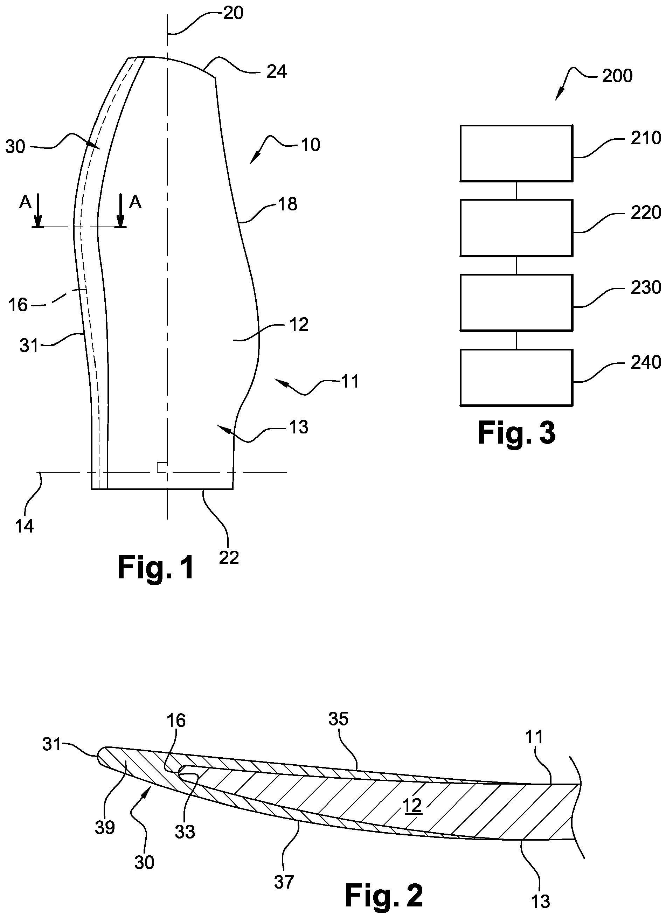

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seule la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par drapage ou mise en forme d'une texture fibreuse tissée. A titre d'exemple, le matériau composite utilisé peut être composé par un assemblage de fibres tissées de carbone et d'une matrice résineuse, l'ensemble étant formé par moulage au moyen d'un procédé d'injection de résine de type RTM (pour « Resin Transfer Molding »).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 du renfort structurel 30 comporte également une cavité interne 40 s'étendant sur la hauteur du renfort structurel 30, du pied au sommet de l'aube.

Le renfort structurel 30 est métallique et préférentiellement à base de titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus particulièrement décrit notamment dans la demande de brevet EP1908919.

Le procédé selon l'invention permet de réaliser un renfort structurel tel qu'illustré à la figure 2, la figure 2 illustrant le renfort 30 dans son état final.

La figure 3 représente un schéma synoptique illustrant les principales étapes d'un procédé de réalisation 200 d'un renfort structurel métallique 30 de bord d'attaque d'aube 10 tel qu'illustré aux figures 1 et 2.

La première étape 210 du procédé de réalisation 200 est une étape de découpe d'une pluralité de pièces métalliques 101 souples, formant des clinquants métalliques, à partir d'une feuille métallique ou d'un feuillard métallique souple de faible épaisseur à base de titane.

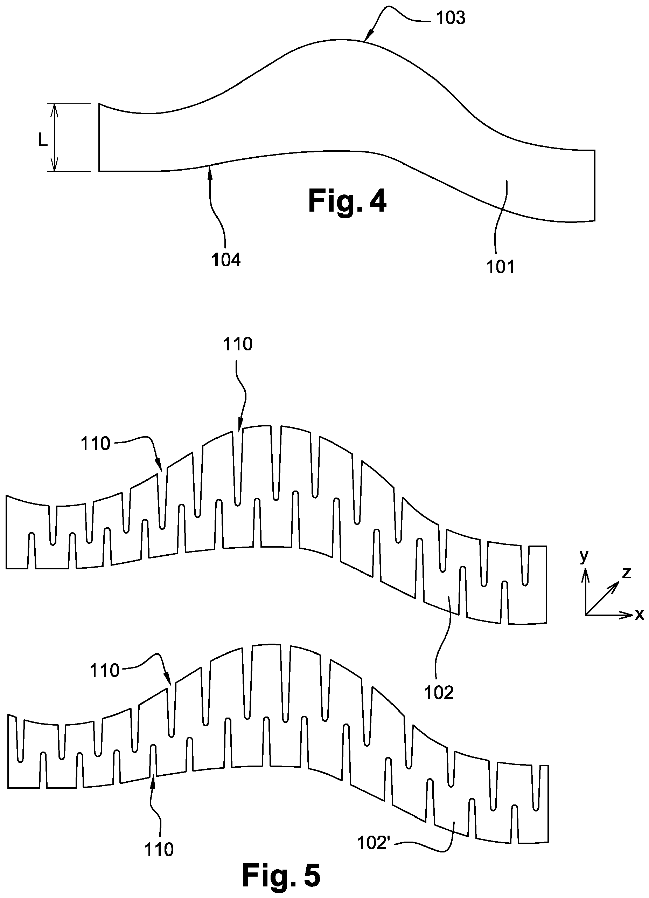

Les clinquants métalliques 101 tels qu'illustrés à la figure 4, sont découpés par des moyens classiques de découpe de feuilles métalliques de faible épaisseur, c'est à dire d'une épaisseur inférieure à 0,3 mm. Ainsi, les clinquants métalliques 101 peuvent être découpés par exemple par des moyens de découpe à l'emporte-pièce, des moyens de découpe par cisaillement, ou encore par jet d'eau, etc.

Les clinquants métalliques 101 découpés ont une géométrie correspondant sensiblement au développé d'une face du renfort métallique 30 de bord d'attaque d'aube 10, tel qu'illustré aux figures 1 et 2.

La deuxième étape 220 du procédé de réalisation 200 est une étape de découpe d'une pluralité d'encoches 110 dans chaque clinquant métallique 101.

Les encoches 110 sont réalisées avantageusement de façon à obtenir des ouvertures en quinconce réparties de part et d'autre des champs longitudinaux 103, 104 du clinquant métallique 101.

Le pas des encoches 110 dans le sens longitudinal du clinquant 101 ainsi que la forme des encoches 110 sont adaptés en fonction des besoins de la pièce métallique à réaliser.

Le clinquant métallique 101 comportant une pluralité d'encoches réparties en quinconce sur sa longueur forme ainsi un « serpentin » métallique souple 102, 102' illustré à la figure 5. Le serpentin métallique 102, 102' ainsi obtenu est facilement déformable selon les trois dimensions X, Y, et Z et permet de s'adapter à toutes les géométries.

Selon un autre mode de réalisation de l'invention, la première étape de découpe et la deuxième étape de découpe peuvent être réalisées simultanément dans le même outillage soit en deux opérations soit en une unique opération de découpe.

La troisième étape 230 est une étape de positionnement d'un ou de plusieurs serpentin(s) métallique(s) 102, 102'.

Selon un premier mode de réalisation, l'étape de positionnement 230 est réalisée par positionnement d'un ou de plusieurs serpentin(s) métallique(s) sur un gabarit de forme (non représenté) représentant la contre-empreinte de la pièce à réaliser. Dans notre exemple de réalisation, le gabarit de forme à la géométrie du bord d'attaque de l'aube de turbomachine.

La mise en place des serpentins métalliques 102, 102' est réalisée par chevauchement du serpentin métallique au niveau de chaque encoche 110 sur le gabarit de forme.

La multitude d'encoches réparties sur la longueur du clinquant permet au serpentin métallique d'épouser n'importe quelle forme complexe d'un gabarit de forme.

Avantageusement, l'étape de positionnement peut également consister à une opération d'empilement d'une pluralité de serpentins métalliques 102, 102'.

A cet effet, les serpentins métalliques 102, 102' sont avantageusement réalisés selon deux catégories distinctes qui comportent des pas de découpe différents et complémentaires. C'est-à-dire que les deux catégories de serpentins métalliques sont réalisées avec un décalage du pas de découpe permettant, lors de la superposition de serpentins métalliques de chaque catégorie, de recouvrir les manques de matières dus aux encoches 110 du serpentin métallique positionné en dessous.

Avantageusement, les différentes couches de serpentins métalliques 102, 102' peuvent être maintenues de façon solidaire par collage ou par des moyens de soudure.

Le collage de deux couches de serpentins métalliques 102, 102' en titane peut être réalisé simplement par échauffement des deux serpentins métalliques superposés sous une atmosphère faiblement pressurisée.

La soudure est réalisée par des moyens de soudure connus permettant de souder deux feuilles métalliques en titane de faible épaisseur. Ainsi, à titre d'exemple, les serpentins métalliques 102, 102' sont assemblés par des points de soudure, par un procédé de soudage par décharge électrique ou encore par tout autre moyen permettant de solidariser deux feuilles de titane de faible épaisseur.

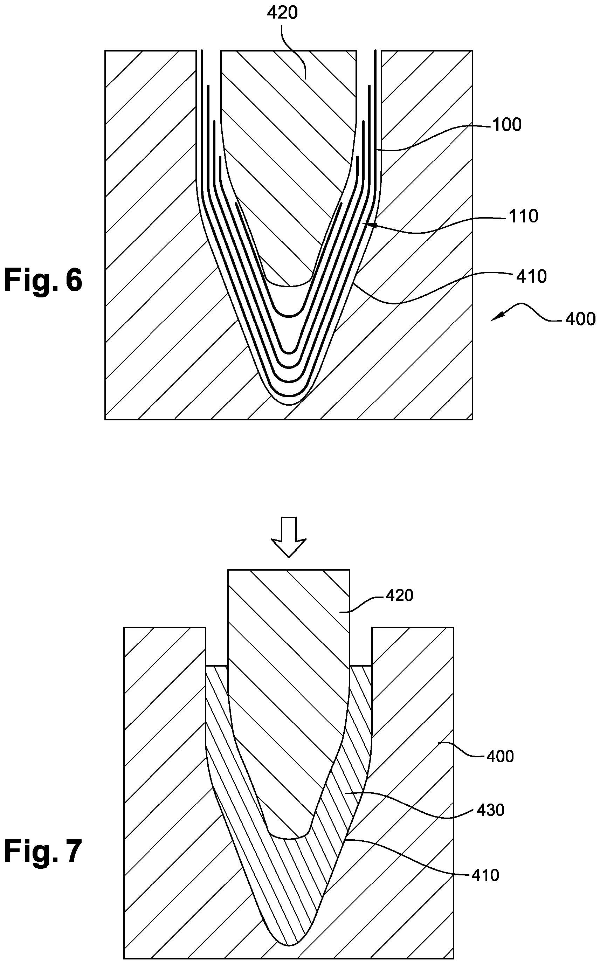

Dans ce premier mode de réalisation de l'invention, une opération supplémentaire de mise en place de l'empilement des serpentins métalliques 102, 102' dans un outillage de forme 400, illustré de manière schématique à la figure 6, est nécessaire. L'outillage 400 comporte une empreinte 410 (matrice) correspondant à la forme externe finale du renfort métallique 30 et une contre-empreinte 420 (poinçon) correspondant à la forme interne finale du renfort métallique de bord d'attaque.

Selon un deuxième mode de réalisation, l'étape de positionnement 230 est réalisée directement sur la contre-empreinte 420 de l'outillage de forme 400 tel qu'illustré à la figure 6.

Selon un troisième mode de réalisation de l'invention, l'étape de positionnement 230 est réalisée directement dans l'empreinte 420 de l'outillage par positionnement successifs des différents serpentins métalliques.

De façon avantageuse, les serpentins métalliques 102, 102' sont réalisés à partir de clinquants 101 ayant des largeurs L différentes de sorte que l'empilement, formée par les différentes couches de serpentins métalliques 102, 102', respecte les exigences d'épaisseurs matières nécessaire pour la réalisation de la pièce finale (i.e. le renfort métallique 30).

Il est également envisagé d'optimiser les épaisseurs de l'empilement en réalisant des serpentins métalliques souples d'épaisseur différente, c'est-à-dire avec des épaisseurs variant sensiblement entre 0,05 et 0,3 mm.

Selon un autre exemple de réalisation, le procédé selon l'invention peut comporter une étape supplémentaire de confection de poches métalliques à partir d'un ou de plusieurs clinquants métalliques 101 découpés lors de la première étape 210 de découpe.

Ainsi, lors de cette étape de confection, une poche métallique peut être réalisée à partir d'un unique clinquant métallique plié en forme de V qui est ensuite découpé sensiblement à la géométrie de la pièce à réaliser.

Une poche métallique peut également être réalisée en superposant un premier clinquant 101 correspondant à la géométrie de la face intrados du renfort métallique 30 avec un deuxième clinquant 101 correspondant à la géométrie de la face extrados du renfort métallique 30. Les deux clinquants 101 sont ensuite assemblés au moins au niveau d'une bordure commune correspondant sensiblement au profil du bord d'attaque 31 du renfort 30 par exemple par collage ou par des moyens de soudure de façon à former une poche métallique.

Le collage des deux clinquants métalliques 101 en titane peut être réalisé simplement par échauffement de deux clinquants métalliques 101 superposés sous une atmosphère faiblement pressurisée.

La soudure au niveau de la bordure commune est réalisée par des moyens de soudure connus permettant de souder deux feuilles métalliques en titane de faible épaisseur. Ainsi, à titre d'exemple, les deux clinquants 101 sont assemblés par des points de soudure, ou encore par un procédé de soudage électrique.

La deuxième étape 220 de découpe du procédé de réalisation 200 permet donc de réaliser une pluralité d'encoches sur les poches métalliques ainsi confectionnées de façon à obtenir des serpentins métalliques en forme de V.

Les encoches 110 sont réalisées avantageusement de façon à obtenir des ouvertures en quinconce réparties de part et d'autre des champs longitudinaux des poches métalliques.

Selon un autre mode de réalisation du procédé selon l'invention, cette étape de confection de poches métalliques peut intervenir postérieurement à la deuxième étape 220 de découpe d'une pluralité d'encoches sur les clinquants métalliques.

Dans ce mode de réalisation, les serpentins métalliques en forme de V sont confectionnées à partir d'un unique serpentin métallique plié ou à partir de deux serpentins métalliques 102, 102', tels qu'illustré à la figure 5, assemblé par collage ou par des moyens de soudure, tels que décrits précédemment, au niveau de bordures communes.

Dans les différents modes de réalisation permettant de réaliser des serpentins métalliques en forme de V, l'étape de positionnement 230 est réalisée par positionnement d'un ou de plusieurs serpentins métalliques en forme de V directement sur la contre-empreinte 420 de l'outillage de forme 400 ou encore dans l'empreinte 410 de l'outillage de forme 400.

Les serpentins métalliques en forme de V seront préférentiellement positionnés sur l'arête de la contre-empreinte 420 (formant le bord d'attaque de l'aube) de manière à faciliter l'opération de positionnement des différents serpentins métalliques.

Selon un autre exemple de réalisation, ne faisant pas partie des revendications, un insert peut être inséré entre deux serpentins métalliques 102, 102' successifs de manière à fournir par exemple une surépaisseur de matière plus conséquente, un renfort spécifique réalisé dans un matériau différent ou encore pour réaliser un renfort métallique creux.

A titre d'exemple, l'insert peut être un insert massif réalisé par un procédé de forgeage, d'usinage, ou encore par coulé. ou encore un insert tissé au moyen de fils métalliques par exemple avec des fils de titane et/ou des fils à base de carbure de silicium et de titane (SiC-Ti), et/ou des fils enduits de Bore (SiC-Bore), ou encore de Carbure de Silicium (SiC-SiC).

Quelle que soit la nature du matériau utilisé pour la réalisation de l'insert inséré entre les serpentins, il est nécessaire que ce matériau soit compatible avec la nature du matériau utilisé pour la réalisation des serpentins métalliques et présente des propriétés permettant le formage superplastique et le soudage diffusion.

Pour la réalisation d'un renfort métallique creux (non représenté), l'insert est un insert fugitif réalisé dans un matériau différent du matériau utilisé pour les clinquants métalliques 101.

On entend par « insert fugitif » un insert qui n'est pas destiné à être permanant et qui est seulement nécessaire à la réalisation du renfort métallique creux de bord d'attaque. L'insert fugitif n'est donc pas présent dans le renfort métallique dans son état final et ne participe aucunement aux caractéristiques mécaniques du renfort métallique.

L'insert fugitif est par exemple réalisé dans un matériau capable de résister à une haute température, de l'ordre de 900°C, une haute pression, de l'ordre de 1000 bar, et qui est compatible avec les matériaux des clinquants métalliques 101 de façon à ne pas créer d'impuretés ou d'oxydation dans la préforme 110.

Le matériau de l'insert fugitif doit également pouvoir être attaqué chimiquement par dissolution au moyen d'un agent chimique.

Avantageusement, l'insert fugitif est réalisé en cuivre, ou en quartz ou en silice.

La forme de l'insert fugitif incorporé dans l'empilement des clinquants métalliques 101 est fonction de la forme de la cavité interne finale désirée.

La quatrième étape 240 du procédé de réalisation 200 est une étape de pressage isostatique à chaud (HIP pour Hot Isostatic Pressing en langue anglaise) de l'empilement formé dans l'outillage 400, illustré à la figure 7.

Le pressage isostatique à chaud est un procédé de fabrication très utilisé et connu pour réduire la porosité des métaux et influer sur la densité de nombreux métaux, tels que les céramiques. Le procédé de pressage isostatique permet d'améliorer en outre les propriétés mécaniques, l'exploitabilité des matériaux.

Le pressage isostatique est réalisé à haute température (classiquement entre 400°C et 1400°C, et de l'ordre de 1000°C pour le titane) et à pression isostatique.

Ainsi, l'application de la chaleur combinée à la pression interne élimine les espaces vides de l'empilement, ainsi que les microporosités au moyen d'une combinaison de déformation plastique, de fluage, et de soudage diffusion de façon à former une pièce massive 430.

La pièce massive 430 résultant de l'étape de pressage isostatique comporte les profils interne et externe du renfort métallique 30. La pièce massive 430 est ensuite démoulée de l'outillage 400.

L'étape de pressage isostatique est réalisée sous vide, avantageusement sous vide secondaire soit dans un outillage soudé dans lequel le vide secondaire est réalisé, soit sous sac à l'autoclave, le choix du procédé dépendant du nombre de pièce à produire. Le vide secondaire permet d'éviter la présence d'oxygène dans l'outillage et au niveau de la structure fibreuse, lors de l'étape de pressage isostatique du titane.

L'outillage 400 est réalisé dans un alliage mécanique dit superalliage ou alliage à haute performance.

L'étape 240 de pressage isostatique peut comporter préalablement une étape de nettoyage, de dégraissage et/ou d'une attaque chimique des différents serpentins métalliques 102, 102' de façon à supprimer les impuretés résiduelles dans l'empilement.

Avantageusement, l'étape de nettoyage des impuretés est réalisée par trempage de l'ensemble fibreux dans un bain d'agent nettoyant ou d'agent chimique.

Dans le cadre de fabrication d'un renfort métallique creux, le procédé selon l'invention peut comporter une étape supplémentaire d'attaque chimique de l'insert introduit lors de l'étape d'empilement des différentes poches et faisant partie intégrante de la pièce massive 430. L'attaque chimique est réalisée au moyen d'un agent chimique apte à attaquer le matériau dans lequel l'insert est réalisé. L'attaque chimique de l'insert fugitif permet de dissoudre l'insert fugitif de sorte que l'espace libéré par l'insert dissout forme la cavité interne dans le renfort métallique. Avantageusement, l'étape d'attaque chimique est réalisée par trempage de la pièce massive 430 dans un bain comportant l'agent chimique apte à dissoudre l'insert. L'agent chimique est par exemple un acide ou une base.

Avantageusement, l'agent chimique est apte à dissoudre le cuivre, le quartz ou encore la silice.

En association avec ces principales étapes de réalisation, le procédé selon l'invention peut également comporter une étape de finition et de reprise par usinage de la pièce massive creuse obtenue à la sortie de l'outillage de façon à obtenir le renfort 30. Cette étape de reprise comporte :
- une étape de reprise du profil de la base 39 du renfort 30 de façon à l'affiner et notamment du profil aérodynamique du bord d'attaque 31 ;
- une étape de reprise des flancs 35, 37 ; cette étape consistant notamment au détourage des flancs 35, 37 et à l'amincissement des flancs intrados et extrados ;
- une étape de finition permettant d'obtenir l'état de surface requis.

En association avec ces principales étapes de réalisation, le procédé selon l'invention peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé par rayon X.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine ou encore à la réalisation d'un renfort métallique d'hélice en composite ou métallique.

Les autres avantages de l'invention sont notamment les suivants :
- réduction des coûts de réalisation ;
- réduction du temps de réalisation ;
- simplification de la gamme de fabrication ;
- réduction des coûts matière.

## Revendications

1. Procédé de réalisation (200) d'une pièce métallique (30) comportant successivement :
- une étape (220) de découpe d'une pluralité d'encoches (110) dans au moins un clinquant métallique (101) souple de façon à former des ouvertures reparties en quinconce de part et d'autre des bordures longitudinales (103, 104) du clinquant de manière à former au moins un serpentin métallique (102, 102') ;
- une étape (230) de positionnement dudit au moins un serpentin métallique (102, 102') sur un outillage de forme (410, 420), ledit au moins un serpentin étant apte à se déformer manuellement à froid selon les trois directions de l'espace (X, Y, Z) ;
- une étape (240) de pressage isostatique à chaud dudit au moins un serpentin métallique (102, 102') dans un outillage (400) provoquant l'agglomération dudit serpentin métallique (102, 102') de manière à obtenir ladite pièce métallique (30).

2. Procédé de réalisation (200) d'une pièce métallique (30) selon la revendication 1 **caractérisé en ce que** ledit au moins un serpentin métallique est formé par l'assemblage de deux clinquants métalliques (101) découpés lors de ladite étape (220) de découpe d'une pluralité d'encoches (110).

3. Procédé de réalisation (200) d'une pièce métallique (30) selon la revendication 1 **caractérisé en ce que** préalablement à ladite étape (230) de positionnement, ledit procédé comporte une étape de confection d'au moins une poche métallique à partir d'au moins un clinquant métallique (101) souple, ledit au moins un serpentin métallique étant formé par une étape (220) de découpe d'une pluralité d'encoches (110) dans ladite au moins une poche métallique souple.

4. Procédé de réalisation (200) d'une pièce métallique (30) selon l'une des revendications 1 à 3 **caractérisé en ce que** ladite étape (220) de découpe d'encoches (110) est réalisée par découpe d'une pluralité d'encoches (101) réparties sur la longueur dudit clinquant métallique (101) selon un pas de découpe donné.

5. Procédé de réalisation (200) d'une pièce métallique (30) selon l'une des revendications 1 à 4 **caractérisé en ce que** préalablement à ladite étape (220) de découpe d'une pluralité d'encoches (110), ledit procédé comporte une étape (210) de découpe d'au moins un clinquant métallique souple (101) dans au moins une feuille métallique d'une épaisseur inférieure à 0,3 mm.

6. Procédé de réalisation (200) d'une pièce métallique (30) selon l'une des revendications 1 à 5 **caractérisé en ce que** préalablement à ladite étape (240) de pressage isostatique, ledit procédé comporte une étape d'empilement d'au moins un deuxième serpentin métallique (102, 102') sur ledit premier serpentin métallique (102, 102') positionné sur ledit outillage de forme (420).

7. Procédé de réalisation (200) d'une pièce métallique (30) selon la revendication 6 **caractérisé en ce que** deux serpentins métalliques empilés successivement lors de ladite étape d'empilement ont des pas de découpe décalés l'un par rapport à l'autre.

8. Procédé de réalisation (200) d'une pièce métallique (30) selon l'une des revendications 1 à 7 **caractérisé en ce que** ladite pièce métallique (30) est un renfort métallique de bord d'attaque ou de bord de fuite d'aube de turbomachine ou un renfort métallique d'hélice.

9. Procédé de réalisation (200) d'une pièce métallique (30) selon l'une des revendications 1 à 8 **caractérisé en ce que** ledit outillage de forme est un gabarit de forme ou la contre-empreinte (420) d'un outillage (400) de pressage isostatique ou l'empreinte (410) dudit outillage (400) de pressage isostatique.

## Patentansprüche

1. Realisierungsverfahren (200) eines Metallstücks (30), umfassend sukzessive:
- einen Schritt (220) zum Ausschneiden einer Vielzahl von Kerben (110) aus wenigstens einem weichen Metallflitter (101) derart, dass Öffnungen gebildet werden, die auf jeder Seite der Längsränder (103, 104) des Metallflitters derart versetzt sind, dass wenigstens eine Metall-Rohrschlange (102, 102') gebildet wird;
- einen Schritt (230) zur Positionierung der genannten wenigstens einen Rohrschlange (102, 102') auf einem Formwerkzeug (410, 420), wobei die wenigstens eine Rohrschlage geeignet ist, sich manuell kalt gemäß den drei Richtungen des Raums (X, Y, Z) zu verformen;
- einen Schritt (240) zum isostatischen Heißpressen der genannten wenigstens einen Rohrschlange (102, 102') in einem Werkzeug, das die Agglomeration der genannten Metall-Rohrschlange (102, 102') derart hervorruft, dass das genannte Metallstück (30) erhalten wird.

2. Realisierungsverfahren (200) eines Metallstücks (30) gemäß Anspruch 1, **dadurch gekennzeichnet, dass** die genannte wenigstens eine Metall-Rohrschlange per Zusammenbau von zwei Metallflittern (101) geformt ist, die bei dem genannten Schritt (220) zum Ausschneiden einer Vielzahl von Kerben (110) ausgeschnitten werden.

3. Realisierungsverfahren (200) eines Metallstücks (30) gemäß Anspruch 1, **dadurch gekennzeichnet, dass** vor dem genannten Schritt (230) zur Positionierung das genannte Verfahren einen Fertigungsschritt wenigstens einer Metalltasche ausgehend von wenigstens einem weichen Metallflitter (101) umfasst, wobei die genannte wenigstens eine Metall-Rohrschlange durch einen Schritt (220) zum Ausschneiden einer Vielzahl von Kerben (110) aus der genannten wenigstens einen weichen Metalltasche gebildet ist.

4. Realisierungsverfahren (200) eines Metallstücks (30) gemäß irgendeinem der Ansprüche 1 bis 3, **dadurch gekennzeichnet, dass** der genannte Schritt (220) zum Ausschneiden von Kerben (110) per Ausschneiden einer Vielzahl von Kerben (101) realisiert ist, die auf der Länge des genannten Metallflitters (101) gemäß einem bestimmten Schritt zum Ausschneiden verteilt sind.

5. Realisierungsverfahren (200) eines Metallstücks (30) gemäß irgendeinem der Ansprüche 1 bis 4, **dadurch gekennzeichnet, dass** vor dem genannten Schritt (220) zum Ausschneiden einer Vielzahl von Kerben (110) das genannte Verfahren einen Schritt (210) zum Ausschneiden wenigstens eines weichen Metallflitters (101) aus wenigstens einer Metallfolie einer Dicke von unter 0,3 mm umfasst.

6. Realisierungsverfahren (200) eines Metallstücks (30) gemäß irgendeinem der Ansprüche 1 bis 5, **dadurch gekennzeichnet, dass** vor dem genannten Schritt (240) zum isostatischen Pressen das genannte Verfahren einen Schritt zum Stapeln von wenigstens einer zweiten Metall-Rohrschlange (102, 102') auf der genannten ersten Metall-Rohrschlange (102, 102') umfasst, die auf dem genannten Formwerkzeug (420) positioniert ist.

7. Realisierungsverfahren (200) eines Metallstücks (30) gemäß Anspruch 6, **dadurch gekennzeichnet, dass** zwei Metall-Rohrschlangen, die sukzessive bei dem genannten Schritt zum Stapeln gestapelt werden, im Verhältnis zueinander versetzte Ausschnittschritte haben.

8. Realisierungsverfahren (200) eines Metallstücks (30) gemäß irgendeinem der Ansprüche 1 bis 7, **dadurch gekennzeichnet, dass** das genannte Metallstück (30) eine Metallverstärkung der Vorderkante oder der Hinterkante des Rotorblattes einer Turbomaschine oder eine Metallverstärkung eines Propellers ist.

9. Realisierungsverfahren (200) eines Metallstücks (30) gemäß irgendeinem der Ansprüche 1 bis 8, **dadurch gekennzeichnet, dass** das genannte Formwerkzeug eine Formschablone oder die Gegenvertiefung (420) eines isostatischen Presswerkzeugs (400) oder die Vertiefung (410) des genannten isostatischen Presswerkzeugs (400) ist.

## Claims

1. Method for manufacturing (200) a metal part (30) comprising, in sequence:
- a step (220) of cutting a plurality of notches (110) in at least one flexible metal foil (101) in such a way as to form openings that are staggered on either side of the longitudinal edges (103, 104) of the foil in such a way as to form at least one metal coil (102, 102');
- a step (230) of positioning said at least one metal coil (102, 102') on a forming tool (410, 420), said at least one coil being capable of cold-deforming manually in the three directions of space (X, Y, Z);
- a step (240) of hot isostatic pressing said at least one metal coil (102, 102') in a tool (400) causing the bonding of said metal coil (102, 102') in such a way as to obtain said metal part (30).

2. Method for manufacturing (200) a metal part (30) according to claim 1 **characterised in that** said at least one metal coil is formed by the assembly of two metal foils (101) cut during said step (220) of cutting a plurality of notches (110).

3. Method for manufacturing (200) a metal part (30) according to claim 1 **characterised in that** prior to said step (230) of positioning, said method comprises a step of confection of at least one metal pocket from at least one flexible metal foil (101), said at least one metal coil being formed by a step (220) of cutting a plurality of notches (110) in said at least one flexible metal pocket.

4. Method for manufacturing (200) a metal part (30) according to one of claims 1 to 3 **characterised in that** said step (220) of cutting notches (110) is carried out by cutting a plurality of notches (101) distributed over the length of said metal foil (101) according to a given cutting pitch.

5. Method for manufacturing (200) a metal part (30) according to one of claims 1 to 4 **characterised in that** prior to said step (220) of cutting a plurality of notches (110), said method comprises a step (210) of cutting at least one flexible metal foil (101) in at least one metal sheet with a thickness less than 0.3 mm.

6. Method for manufacturing (200) a metal part (30) according to one of claims 1 to 5 **characterised in that** prior to said step (240) of isostatic pressing, said method comprises a step of stacking at least one second metal coil (102, 102') on said first metal coil (102, 102') positioned on said forming tool (420).

7. Method for manufacturing (200) a metal part (30) according to claim 6 **characterised in that** two metal coils stacked in sequence during said step of stacking has cutting pitches that are offset with respect to one another.

8. Method for manufacturing (200) a metal part (30) according to one of claims 1 to 7 **characterised in that** said metal part (30) is a metal reinforcement of a leading edge or of a trailing edge of a blade of a turbomachine or a metal reinforcement of a propeller.

9. Method for manufacturing (200) a metal part (30) according to one of claims 1 to 8 **characterised in that** said forming tool is a shaped template or the counter-impression (420) of a tool (400) of isostatic pressing or the impression (410) of said tool (400) of isostatic pressing.
